# EUROPEAN PATENT APPLICATION

(11) **EP 4 114 009 A1**
(43) Date of publication of application: **04.01.2023**
(21) Application number: 20914765.1
(22) Date of filing: 19.11.2020
(51) Int. Cl.: H04N 21/2187

(54) **DATA PROCESSING METHOD AND APPARATUS OF LIVE BROADCAST APPLICATION, ELECTRONIC DEVICE AND STORAGE MEDIUM**

(30) Priority: 25.02.2020 CN 202010116984
(71) Applicant: Beijing Dajia Internet Information Technology Co., Ltd., Beijing 100085 (CN)
(72) Inventor: ZHANG, Qi, Beijing 100085 (CN)
(74) Representative: Zimmermann, Tankred Klaus
(86) International application number: PCT/CN2020/130186
(87) International publication number: WO 2021/169432

(57) **Abstract**

The disclosure relates to a method and a device for processing data of a live streaming application, an electronic device and a storage medium. The method includes receiving speech control data provided by a first client; obtaining multimedia data corresponding to a level of a virtual object and corresponding to speech control data; and sending the multimedia data to the first client. The disclosure can obtain the multimedia data corresponding to the level of the virtual object and corresponding to the speech control data, where different levels of the virtual object can correspond to different multimedia data, to realize implementation of different growth stages of the virtual object and improve an interactivity of the live streaming application.

## Description

### CROSS-REFERENCE TO RELATED APPLICATION(S)

This disclosure claims priority to CN Patent application No. 202010116984.5, filed on February 25, 2020, in the China National Intellectual Property Administration and titled with "Method and Apparatus For Processing Data Of Live Streaming Application, Electronic Device, And Storage Medium", the disclosure of which is herein incorporated by reference in its entirety.

### FIELD

The disclosure relates to a field of computer Internet technologies, and particularly to a method and an apparatus for processing data of a live streaming application, an electronic device, and a storage medium.

### BACKGROUND

Intelligent speech assistant is becoming more and more widely used in mobile devices. Using speech assistants to operate the mobile devices brings convenience to users, such as faster search paths and more convenient interaction manners. At present, most speech assistants are integrated in a collection system or an independent mobile application, for querying information and operating a mobile phone. In addition, in a field of live streaming on the mobile phone, a host terminal can record and form a video data stream in real time. The video data stream of the host terminal is uploaded to a server after being compressed and edited. The server broadcasts the video data stream to viewer terminals, and the viewer terminals decompress and play the video data stream. During the process of collecting and playing the video data stream, the streamer can interact with viewers. In related arts, interaction manners in a live streaming application include PlayerKilling (PK), communication with another streamer, chat room, gift, or the like. Virtual pet can be added to some live streaming applications. The streamer can interact with the viewer through the virtual pet, which improves the interaction with users.

However, in the existing live streaming application, an instruction is sent to the virtual pet using a finger click operation, which cannot simulate the real pet well, and the interaction between the virtual pet and the streamer is poor.

### SUMMARY

The disclosure provides a method and an apparatus for processing data of a live streaming application, an electronic device and a storage medium, to at least solve a problem, existing in the related art, that the interaction of the live streaming application is poor. Technical solutions of the disclosure are as follows.

According to a first aspect of embodiments of the disclosure, there is provided a method for processing data of a live streaming application, including: receiving speech control data provided by a first client; obtaining multimedia data corresponding to a level of a virtual object and corresponding to the speech control data; and sending the multimedia data to the first client.

In an example embodiment, after receiving the speech control data provided by the first client, the method further includes determining whether a level parameter of the corresponding virtual object reaches a preset level based on the speech control data, each piece of speech control data corresponding to a respective preset level of the virtual object; and said obtaining the multimedia data corresponding to the level of the virtual object and corresponding to the speech control data includes obtaining the multimedia data corresponding to the level of the virtual object and corresponding to the speech control data when the level parameter of the virtual object reaches the preset level.

In an example embodiment, the speech control data includes a control speech for the virtual object; and said receiving the speech control data provided by the first client includes receiving the speech control data including the control speech for the virtual object and provided by the first client; and obtaining a speech control instruction by performing instruction parsing on the speech control data.

In an example embodiment, the multimedia data includes at least one of animation data of the virtual object and function execution data related to the live streaming application; and the speech control data includes at least one of data for controlling actions of the virtual object and function control data related to the live streaming application, the speech control data being in one-to-one correspondence with the multimedia data.

In an example embodiment, said obtaining the multimedia data corresponding to the level of the virtual object and corresponding to the speech control data includes obtaining animation data corresponding to the level of the virtual object and corresponding to the speech control data; and said sending the multimedia data to the first client includes sending the animation data corresponding to the level of the virtual object to the first client.

In an example embodiment, said obtaining the multimedia data corresponding to the level of the virtual object and corresponding to the speech control data includes obtaining function execution data corresponding to the speech control data; and said sending the multimedia data to the first client includes sending the function execution data to the first client.

In an example embodiment, before receiving the speech control data provided by the first client, the method further includes receiving speech data including a designated wake-up word from the first client; and recognizing the designated wake-up word from the first client based on the speech data; and said receiving the speech control data provided by the first client includes receiving the speech control data provided by the first client after recognizing that there is the designated wake-up word.

In an example embodiment, said recognizing the designated wake-up word from the first client based on the speech data includes obtaining a result of whether the speech data contains the designated wake-up word by inputting the speech data into a preset wake-up word recognition model, the preset wake-up word recognition model being obtained by training a preset type of neural network and being configured to output the result of whether the speech data contains the designated wake-up word based on the input speech data.

In an example embodiment, the speech control data includes a pet friend-making request, the pet friend-making request includes a current pet identifier and a friend pet identifier and after determining whether the level parameter of the virtual object reaches the preset level based on the speech control data, the method further includes sending the pet friend-making request to a first client corresponding to the friend pet identifier when the level parameter of the virtual object reaches the preset level; receiving friend-making confirmation information from the first client corresponding to the friend pet identifier; and setting a friend identifier to the current pet identifier and the friend pet identifier based on the friend-making confirmation information and sending friend-making success information to the first client corresponding to the current pet identifier and the first client corresponding to the friend pet information, the friend-making success information is configured to trigger the first clients to generate a friendship special effect.

In an example embodiment, the method further includes sending the multimedia data to a second client, and the second client is a client within the same live streaming room as the first client.

In an example embodiment, the method further includes sending a task data package to a second client, the task data package being for delivering food to the virtual object; receiving task completion data from the second client; and generating pet food data of the virtual object based on the task completion data, and updating an upgrade progress parameter of the virtual object based on the pet food data.

In an example embodiment, after updating the upgrade progress parameter of the virtual object based on the pet food data, the method further includes updating a level parameter of the virtual object when the upgrade progress parameter reaches a preset value; updating a database of the speech control data corresponding to the virtual object based on the level parameter; generating growth information of the virtual object based on the level parameter; and sending the growth information of the virtual object to the first client and/or the second client corresponding to the virtual object.

According to a second aspect of embodiments of the disclosure, there is provided a method for processing data of a live streaming application, including obtaining multimedia data corresponding to a level of a virtual object and corresponding to speech control data; and playing the multimedia data on a page of a live streaming room.

In an example embodiment, the speech control data includes a speech for controlling the virtual object; and before obtaining the multimedia data corresponding to the level of the virtual object and corresponding to the speech control data, the method further includes obtaining a speech control instruction by parsing and recognizing the speech control data in response to a trigger operation for interacting with the virtual object; and sending the speech control instruction to a server; said obtaining the multimedia data corresponding to the level of the virtual object and corresponding to the speech control data includes receiving the multimedia data corresponding to the level of the virtual object and corresponding to the speech control instruction from the server.

In an example embodiment, the speech control data includes a control speech for the virtual object; and before obtaining the multimedia corresponding to the level of the virtual object and corresponding to the speech control data, the method further includes sending the speech control data including the control speech for the virtual object to a server in response to a trigger operation for interacting with the virtual object; said obtaining the multimedia data corresponding to the level of the virtual object and corresponding to the speech control data includes receiving the multimedia data corresponding to the level of the virtual object and corresponding to the speech control data from the server.

In an example embodiment, the multimedia data includes at least one of animation data of the virtual object and function execution data related to a live streaming application; and the speech control data includes at least one of data for controlling actions of the virtual object and function control data related to the live streaming application, and the speech control data is in one-to-one correspondence with the multimedia data.

In an example embodiment, said obtaining the multimedia data corresponding to the level of the virtual object and corresponding to the speech control data includes obtaining animation data corresponding to the level of the virtual object and corresponding to the speech control data; and said playing the multimedia data on the page of the live streaming room includes playing the animation data on the page of the live streaming room.

In an example embodiment, said obtaining the multimedia data corresponding to the level of the virtual object and corresponding to the speech control data includes obtaining function execution data corresponding to the speech control data; and said playing the multimedia data on the page of the live streaming room includes executing a function corresponding to the function execution data on the page of the live streaming room.

In an example embodiment, the method further includes sending speech data including a designated wake-up word to the server; and obtaining the speech control instruction by parsing and recognizing the speech control data in response to a trigger operation for interacting with the virtual object when information that the designated wake-up word is correct is received from the server.

In an example embodiment, the method further includes obtaining a speech input by a user; determining whether the designated wake-up word is included by performing preliminary recognition based on the speech; and sending the speech data including the designated wake-up word to the server when the speech includes the designated wake-up word.

In an example embodiment, the method further includes receiving a speech input by a user; obtaining a result of whether the speech contains the designated wake-up word by inputting the speech into a preset wake-up word recognition model; the preset wake-up word recognition model being obtained by training a preset type of neural network and being configured to output the result of whether the speech contains the designated wake-up word based on the input speech; and parsing and recognizing the speech control data in response to a trigger operation for interacting with the virtual object to obtain the speech control instruction when the speech contains the designated wake-up word.

In an example embodiment, the speech control data includes a pet friend-making request, the pet friend-making request includes a current pet identifier and a friend pet identifier; after sending the speech control instruction to the server, the method further includes receiving friend-making success information; and adding the friend pet identifier to a friend list of the virtual object based on the friend-making success information, generating a friendship special effect, and presenting the friendship special effect on the page of the live streaming room.

According to a third aspect of embodiments of the disclosure, there is provided an apparatus for processing data of a live streaming application, including a speech control data receiving module, configured to receive speech control data provided by a first client; a multimedia data obtaining module, configured to obtain multimedia data corresponding to a level of a virtual object and corresponding to the speech control data; and a sending module, configured to send the multimedia data to the first client.

In an example embodiment, the apparatus further includes a level determining module, configured to determine whether a level parameter of the corresponding virtual object reaches a preset level based on the speech control data, each piece of speech control data corresponding to a respective preset level; and a multimedia data obtaining module, configured to obtain the multimedia data corresponding to the level of the virtual object and corresponding to the speech control data when the level parameter of the virtual object reaches the preset level.

In an example embodiment, the speech control data includes a control speech for the virtual object; and the speech control data receiving module includes a control data receiving unit, configured to receive the speech control data including the control speech for the virtual object provided by the first client; and a parsing unit, configured to obtain a speech control instruction by performing instruction parsing on the speech control data.

In an example embodiment, the multimedia data includes at least one of animation data of the virtual object and animation data related to a live streaming application; and the speech control data includes at least one of data for controlling actions of the virtual object and function control data related to the live streaming application; the speech control data being in one-to-one correspondence with the multimedia data.

In an example embodiment, the multimedia data obtaining module is further configured to obtain animation data corresponding to the level of the virtual object and corresponding to the speech control data; and the sending module is further configured to send the animation data corresponding to the level of the virtual object to the first client.

In an example embodiment, the multimedia data obtaining module is further configured to obtain function execution data corresponding to the speech control data; and the sending module is further configured to send the function execution data to the first client.

In an example embodiment, the apparatus further includes a speech data receiving module, configured to receive speech data including a designated wake-up word from the first client; and a recognizing module, configured to recognize the designated wake-up word from the first client based on the speech data; the speech control data receiving module is further configured to receive the speech control data provided by the first client when recognizing that there is the designated wake-up word.

In an example embodiment, the recognizing module is further configured to obtain a result of whether the speech data includes the designated wake-up word by inputting the speech data into a preset wake-up word recognition model, the preset wake-up word recognition model being obtained by training a preset type of neural network and being configured to output the result of whether the speech data includes the designated wake-up word based on the input speech data.

In an example embodiment, the speech control data includes a pet friend-making request, the pet friend-making request includes a current pet identifier and a friend pet identifier; and the apparatus further includes a pet friend-making request sending module, configured to send a pet friend-making request to the first client corresponding to the friend pet identifier when the level parameter of the virtual object reaches the preset level; a friend-making confirmation information receiving module, configured to receive friend-making confirmation information from the first client corresponding to the friend pet identifier; and a friend-making success information sending module, configured to set a friend identifier to the current pet identifier and the friend pet identifier based on the friend-making confirmation information and send friend-making success information to the first client corresponding to the current pet identifier and the first client corresponding to the friend pet identifier, the friend-making success information being configured to trigger the first clients to generate a friendship special effect.

In an example embodiment, the sending module is further configured to send the multimedia data to a second client, and the second client is a client within the same live streaming room with the first client.

In an example embodiment, the apparatus further includes a task data package sending module, configured to send a task data packet to a second client, the task data packet is for delivering food to a virtual object; a task completion data receiving module, configured to receive task completion data from the second client; and an upgrade progress updating module, configured to generate pet food data of the virtual object based on the task completion data and update an upgrade progress parameter of the virtual object based on the pet food data.

In an example embodiment, the apparatus further includes a level parameter updating module, configured to update a level parameter of the virtual object when the upgrade progress parameter reaches a preset value; a database updating module, configured to update a database of the speech control data corresponding to the virtual object based on the level parameter; a growth information generating module, configured to generate growth information of the virtual object based on the level parameter; and a growth information sending module, configured to send the growth information of the virtual object to the first client and/or the second client corresponding to the virtual object.

According to a fourth aspect of embodiments of the disclosure, there is provided an apparatus for processing data of a live streaming application, including a multimedia data receiving module, configured to receive multimedia data corresponding to a level of a virtual object and corresponding to speech control data; and a playing module, configured to play the multimedia data on a page of a live streaming room.

In an example embodiment, the speech control data includes a speech for controlling the virtual object; and the apparatus further includes a parsing and recognizing module, configured to obtain a speech control instruction by parsing and recognizing the speech control data in response to a trigger operation for interacting with the virtual object; and an instruction sending module, configured to send the speech control instruction to a server; the multimedia data obtaining module is further configured to receive the multimedia data corresponding to the level of the virtual object and corresponding to the speech control instruction from the server.

In an example embodiment, the speech control data includes a control speech for the virtual object; and the apparatus further includes a speech control data sending module, configured to send the speech control data including the control speech for the virtual object to a server in response to a trigger operation for interacting with the virtual object; and the multimedia data obtaining module is further configured to receive the multimedia data corresponding to the level of the virtual object and corresponding to the speech control data sent from the server.

In an example embodiment, the multimedia data includes at least one of animation data of the virtual object and function execution data related to a live streaming application; and the speech control data includes at least one of data for controlling actions of the virtual object and function control data related to the live streaming application; the speech control data is in one-to-one correspondence with the multimedia data.

In an example embodiment, the multimedia data obtaining module is further configured to obtain animation data corresponding to the level of the virtual object and corresponding to the speech control data; and the playing module is further configured to play the animation data on the page of the live streaming room.

In an example embodiment, the multimedia data obtaining module is further configured to obtain function execution data corresponding to the speech control data; and the playing module is further configured to execute a function corresponding to the function execution data on the page of the live streaming room.

In an example embodiment, the apparatus includes a speech data sending module, configured to send speech data including a designated wake-up word to the server; the parsing and recognizing module is further configured to obtain a speech control instruction by parsing and recognizing the speech control data in response to the trigger operation for interacting with the virtual object when receiving information that the designated wake-up word is correct from the server.

In an example embodiment, the apparatus further includes a speech inputting module, configured to obtain a speech input by a user; and a preliminary recognizing module, configured to determine whether the designated wake-up word is contained by performing preliminary recognition based on the speech; the speech data sending module is further configured to send the speech data including the designated wake-up word to the server when the speech includes the designated wake-up word.

In an example embodiment, the apparatus further includes a speech inputting module, configured to obtain a speech input by a user; and a wake-up word recognizing module, configured to obtain a result of whether the speech includes the designated wake-up word by inputting the speech into a preset wake-up word recognition model; the preset wake-up word recognition model being obtained by training a preset type of neural network and being configured to output the result of whether the speech includes the designated wake-up word based on the input speech; the parsing and recognizing module is further configured to obtain the speech control instruction by parsing and recognizing the speech control data in response to the trigger operation for interacting with the virtual object when the speech contains the designated wake-up word.

In an example embodiment, the speech control data includes a pet friend-making request, the pet friend-making request includes a current pet identifier and a friend pet identifier; the apparatus further includes a friend-making success information receiving module, configured to receive friend-making success information; and a friendship special effect presenting module, configured to add the friend pet identifier to a friend list of the virtual object based on the friend-making success information, generate a friendship special effect, and present the friend special effect on the page of the live streaming room

According to a fifth aspect of embodiments of the disclosure, there is provided a computer program product including computer programs, the computer programs are stored in a readable storage medium. At least one process of the device reads and execute the computer programs stored in the readable storage medium such that the device executes a method for processing data of a live steaming application in any of embodiments of the first aspect or a method for processing data of a live streaming application in any of embodiments of the second aspect.

Technical solutions according to embodiments of the disclosure may bring the following beneficial effects as follows.

By obtaining the multimedia data corresponding to the level of the virtual object and corresponding to the speech control data, different speech control data can be set for different levels of the virtual object, to implement different growth stages of the virtual object. By controlling the actions of the virtual object in the live streaming room based on the speech control data, the screen effect of the virtual object and the interactivity between the user and the virtual object are improved.

It is to be understood that the above general description and the following detailed description are only exemplary and explanatory and do not limit the disclosure.

### BRIEF DESCRIPTION OF THE DRAWINGS

The drawings herein are incorporated into the specification and constitute a part of the specification, illustrating embodiments conforming to the disclosure, and together with the specification are used to explain the principle of the disclosure, and do not constitute an improper limitation of the disclosure.
FIG. 1 is schematic diagram illustrating an application scenario of a method for processing data of a live streaming application according to an example embodiment.
FIG. 2 is a flowchart illustrating a method for processing data of a live streaming application applied to a server according to an example embodiment.
FIG. 3 is a flowchart illustrating a method for processing data of a live streaming application applied to a server according to another example embodiment.
FIG. 4 is a schematic diagram illustrating an interface of a host client for playing music based on music playing data according to an example embodiment.
FIG. 5 is a schematic diagram illustrating an interface of a host client for playing music based on music playing data according to another example embodiment.
FIG. 6 is a schematic diagram illustrating an interface of a host client for upgrading a pet according to an example embodiment.
FIG. 7 is a schematic diagram illustrating an interface of a host client of pets getting married according to an example embodiment.
FIG. 8 is a flowchart illustrating a method for processing data of a live streaming application applied to a first client according to an example embodiment.
FIG. 9 is a flowchart illustrating a method for processing data of a live streaming application applied to a viewer client according to an example embodiment.
FIG. 10 is a block diagram illustrating an apparatus for processing data of a live streaming application according to an example embodiment.
FIG. 11 is a block diagram illustrating an apparatus for processing data of a live streaming application according to another example embodiment.
FIG. 12 is a schematic diagram illustrating an internal structure of an electronic device according to an example embodiment.
FIG. 13 is schematic diagram illustrating an internal structure of an electronic device according to another example embodiment.

### DETAILED DESCRIPTION

In order to enable those of ordinary skill in the art to well understand the technical solutions of the disclosure, the technical solutions in embodiments of the disclosure will be described clearly and completely with reference to accompanying drawings.

It is to be noted that terms "first" and "second" in the specification and claims of the disclosure and the above-mentioned drawings are used to distinguish similar objects, and not necessarily used to describe a specific sequence or a temporal sequence. It is to be understood that the data used in this way can be interchanged under appropriate circumstances such that embodiments of the disclosure described herein can be implemented in an order other than those illustrated or described herein. The implementation manners described in the following example embodiments do not represent all implementation manners consistent with the disclosure. Rather, they are merely examples of devices and methods consistent with some aspects of the disclosure as detailed in the appended claims.

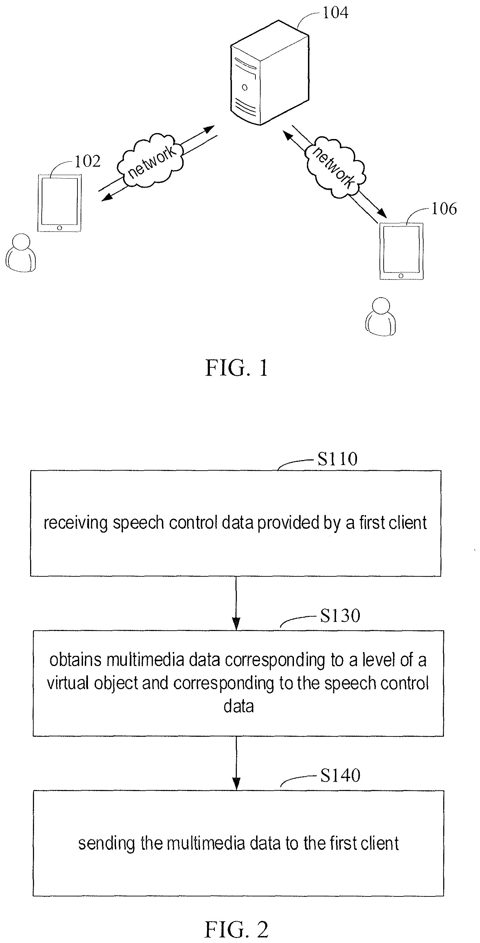

A method for processing data of a live streaming application according to the disclosure can be applied to an application scenario illustrated in FIG. 1, where a first client 102 and a second client 106 interact with a server 104 via network. The server 104 receives speech control data provided by the first client 102, obtains multimedia data corresponding to a level of a virtual object and corresponding to the speech control data, and sends the multimedia data to the first client 102. The multimedia data includes at least one of animation data of the virtual object and function execution data related to a live streaming application. The animation data of the virtual object includes an animation of giving gifts by a virtual pet to viewers, an animation of expressing thanks by a virtual pet to viewers, an animation of giving a performance by a virtual pet, or the like. The function execution data related to the live streaming application includes a music playing instruction for playing music in a live streaming room, a control instruction for turning on a background sound effect in a live streaming room, a control instruction for turning on a microphone, or the like.

The server 104 also sends the multimedia data to the second client 104 to control the second client 104 to play the multimedia data. The first client 102 is a host client or a viewer client with a control privilege. The second client 104 is a viewer client that accesses the live streaming room of the host client. There is no specific order between sending the multimedia data to the second client 104 by the server 104 and sending the multimedia data to the first client 102 by the server 104.

In a case where the speech control data is playing music, the server 104 sends music playing data to the first client 102 when a level parameter of the virtual object reaches a preset level, to control the first client 102 to play music. In a case where the speech control data is controlling a virtual object to perform an action, the server 104 obtains animation data corresponding to the level of the virtual object and corresponding to the speech control data when a level parameter of the virtual object reaches the preset level. The animation data is sent to the first client 102 and the second client 106, where the second client 106 is a viewer client accessing the live streaming room of the first client. The animation data refers to image data related to actions performed by the virtual object and audio data related to sound generated by the virtual object.

The method for processing data of a live streaming application according to the disclosure can solve a technical problem depending on applications. In detail, after the server 104 obtains the speech control data, the server 104 determines whether the level parameter of the virtual object corresponding to the speech control data reaches the preset level. When the level parameter reaches the preset level, the speech control data is executed. The disclosure can set different speech control data based on different levels of the virtual object, to represent different growth stages of the virtual object. Actions of the virtual object in the live streaming room are controlled by the speech control data. Visual effect of the virtual object is improved and interactivity between the streamer, the viewers and the virtual object is improved. Therefore, with the method for processing data of a live streaming application, interest of the interaction between the streamer and the viewer during the live streaming is increased, a loss rate of viewers during the live streaming is reduced, and a loss rate of live streaming streamers is reduced.

The first client 102 and the second client 106 can be, but are not limited to, various personal computers, notebook computers, smart phones, tablet computers, and portable wearable devices. The server 104 can be an independent server or a server cluster composed of multiple servers.

FIG. 2 is a flowchart illustrating a method for processing data of a live streaming application according to an example embodiment. As illustrated in FIG. 2, the method for processing data of a live streaming application is applied to the server 104 and includes the following.

At block S 110, speech control data provided by a first client is received.

The first client can be a host client or a viewer client with a control privilege. Certainly, the first client can also be other clients using a live streaming application and having the control privilege. A user can ask for a use privilege of a virtual object from the live streaming application to use and control the virtual object. For ease of description, the first client in this embodiment is for example a host client.

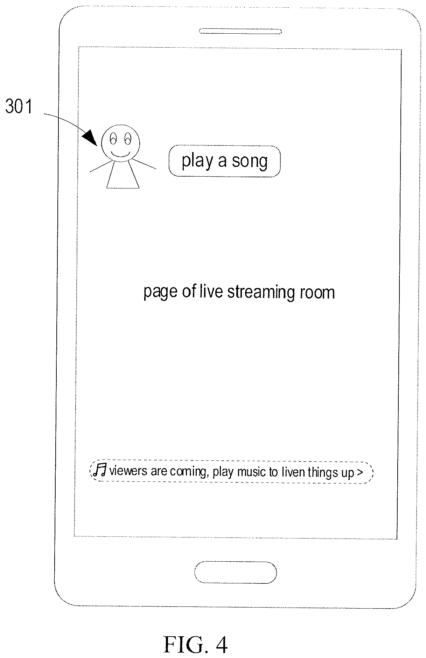

The speech control data is a speech or a speech control instruction subjected to audio and video processing. The speech subjected to the audio and video processing is presented through an interface of a live streaming room of the first client in a form of an icon of the virtual object combined with text. As illustrated in FIG. 4, data for controlling a computer device can be issued by speech. For example, the streamer provides the speech of "Kwai, Kwai, tell a joke". After it is identified that there is a designated wake-up word of "Kwai", the speech control data of "tell a joke" can be received.

At block S130, the multimedia data corresponding to a level of the virtual object and corresponding to the speech control data is obtained.

The speech control data corresponds to the multimedia data. In detail, when the speech control data is playing music, the corresponding multimedia data is music playing data for playing music in the live streaming room. When the speech control data is "dance", the corresponding multimedia data is animation data of the virtual object dancing. Certainly, the multimedia data also needs to correspond to the level of the virtual object, as the virtual object has different appearances at different growth stages. For example, when the speech playing data is "dance" and the virtual object is a virtual pet in a teenager stage, the animation data of the virtual object dancing is animation data of the virtual pet in a teenager stage dancing. The virtual object may be a virtual pet, an appearance, or a prop that is set based on the live broadcast application.

At block S140, the multimedia data is sent to the first client.

The multimedia data includes at least one of the animation data of the virtual object and the function execution data related to the live streaming application. The animation data of the virtual object includes an animation of giving gifts by a virtual pet to viewers, an animation of expressing thanks by a virtual pet to viewers, and an animation of giving a performance by a virtual pet. The function execution data related to the live streaming application includes a music playing instruction for playing music in the live streaming room, a control instruction for turning on a background sound effect of the live streaming room, and a control instruction for turning on a microphone. The speech control data includes at least one of data for controlling actions of the virtual object and function control data related to the live streaming application. The speech control data is in one-to-one correspondence with the multimedia data.

In one of embodiments, the method for processing data of a live streaming application further includes: sending the multimedia data to a second client to control the second client to play the multimedia data. The second client is a client accessing the same streaming room with the first client. Sending the multimedia data to the second client and sending the multimedia data to the first client are in no particular order.

Playing the multimedia data by the first client and/or the first client is presenting animation images of the virtual object on a page of the live streaming room and playing speech provided by the virtual object on the first client and/or the second client. For example, the speech control data is "play music", the server can send music playing control data obtained from the speech control data of "play music" to the first client. The first client plays the music based on the music playing control data. When the speech control data is "tell a joke", the server obtains and sends joke-telling data (including animation and audio) of the virtual object to the first client and/or the second client. The first client and/or the second client play the animation data, such that the joke can be heard and the action images of the virtual object matching the joke can be viewed.

The first client can be a host client or a viewer client with a control privilege. The host client is a terminal used by a streamer, which can be a mobile phone used by the streamer. The viewer client is a terminal used by a viewer accessing the live streaming room generated by the streamer, which may be a mobile phone, a personal computer, a notebook computer, a smart phone, a tablet computer, or a portable wearable device. After the host client and the viewer client receive the animation data, the host client and the viewer client play the animation data. The animation data may include only the action images of the virtual object, or only the audio data of the virtual object. Certainly, the animation data may include both the action images of the virtual object and the audio data of the virtual object.

In this embodiment, the animation data corresponding to the level of the virtual object and corresponding to the speech control data is obtained and the animation data is sent to the host client. Interaction with the virtual object on the page of the live streaming room can be realized. The speech control data is provided by the host client, such that controlling the virtual object by the streamer can be realized. Realism of the virtual object is improved, which is beneficial to increase enthusiasm of the streamer and improve quality of programs of the streamer.

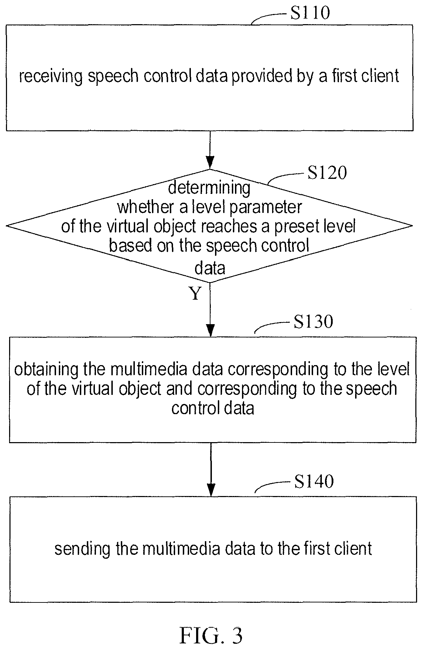

In an example embodiment, as illustrated in FIG. 3, after the block S110, the method can further include a block S120. At block S120, it is determined whether a level parameter of the corresponding virtual object reaches a preset level based on the speech control data. Each piece of speech control data corresponds to a respective preset level of the virtual object. The block S130 includes acquiring the multimedia data corresponding to the level of the virtual object and corresponding to the speech control data when the level parameter of the virtual object reaches the preset level.

Each piece of speech control data corresponds to a corresponding preset level of the virtual object, where the preset levels are determined by the speech control data, and the respective preset level corresponding to each piece of speech control data is stored in the server. The speech control data includes a corresponding virtual object identifier. It can be determined which virtual object provides the speech control data based on the virtual object identifier. Each virtual object is provided with a corresponding level parameter. The level parameter of the virtual object indicates a growth stage of the virtual object. A small level parameter indicates that the virtual object is at a child pet stage, a medium level parameter indicates that the virtual object is at a teenage pet stage, and a high level parameter indicates that the virtual object is at an adult pet stage. Different operations can be performed by the virtual object in different pet stages. Certainly, it can be understood that the higher the level of the virtual object, the more operations the virtual object can perform. For example, the virtual object at a child pet stage can only laugh and cry, the virtual object at the teenage pet stage can play music, tell jokes, make friends, and dance, and the virtual object at the adult pet stage can get married and become sworn brothers or sisters with another one.

Determining whether the level parameter of the corresponding virtual object reaches the preset level based on the speech control data may be determining whether the level parameter of the corresponding virtual object is greater than or equal to the preset level based on the speech control data. The level parameter of the virtual object reaching the preset level indicates that the virtual object meets a level requirement and can execute the speech control data.

In an example embodiment, when the level parameter of the virtual object does not reach the preset level, information that the level of the virtual object is too low to execute the instruction is sent to the first client. The first client displays, on the page of the live streaming room of the first client, the information of the virtual object is too low to execute the instruction. In detail, the display can be performed in a form of an icon of the virtual object combined with text. For example, the text of "the level of the virtual object is too low to execute the instruction" can be displayed. By displaying the information that the instruction cannot be executed in the form of the icon of the pet combined with the text, on the one hand, the user is reminded that the level of the virtual object is low to improve the enthusiasm of the user on increasing the level of the virtual object, and on the other hand the reason why the speech control instruction cannot be executed is fed back to the user.

In an example embodiment, the speech control data includes a control speech for the virtual object. The block S110 includes: receiving the speech control data including the control speech for the virtual object provided by the first client and performing instruction analysis on the speech control data to obtain a speech control instruction.

The user can provide the control speech for the virtual object through the first client. The speech control data can be speech data obtained after the first client processes the control speech or original control speech data received by the first client. The server performs the instruction analysis based on the received speech control data to obtain the speech control instruction. The server can recognize more speech control instructions by analyzing and recognizing the speech control data. A preset speech control instruction recognition model is stored on the server and the server recognizes the speech control instructions through the preset speech control instruction recognition model. The preset speech control instruction recognition model is obtained by training a preset type of neural network and is configured to output the speech control instruction based on the input speech control data. The preset type of neural network includes LeNet-5, AlexNet, ZFNet, VGG-16, GoogLeNet, ResNet, and other neural networks. Certainly, the preset type of neural network also includes a logistic regression function.

In an example embodiment, the multimedia data includes at least one of animation data of the virtual object and function execution data related to a live streaming application. The speech control data includes at least one of data for controlling actions of the virtual object and function control data related to the live streaming application. The speech control data is in one-to-one correspondence with the multimedia data.

In an example embodiment, acquiring the multimedia data corresponding to the level of the virtual object and corresponding to the speech control data includes: acquiring the animation data corresponding to the level of the virtual object and corresponding to the speech control data. Sending the multimedia data to the first client includes: sending the animation data corresponding to the level of the virtual object to the first client.

In an example embodiment, obtaining the multimedia data corresponding to the level of the virtual object and corresponding to the speech control data includes: obtaining the function execution data corresponding to the speech control data. Sending the multimedia data to the first client includes: sending the function execution data to the first client. In this embodiment, the function execution data is sent to the host client to control operations of the live streaming application of the host client. The control of the live streaming application through the virtual object is realized. Visual effect and interest of controlling the live streaming application are improved compared with directly controlling the live streaming application via the speech instruction.

In the above embodiments, the animation data of the virtual object is image data related to actions of the virtual object and audio data related to the sound generated by the virtual object. The animation data of the virtual object includes an animation of giving gifts by a virtual pet to viewers, an animation of expressing thanks by a virtual pet to viewers, an animation of giving a performance by a virtual pet, and the like. The function execution data is data for controlling functions of the live streaming application. The function execution data for the live streaming application includes a music playing instruction for playing music in the live streaming room, a control instruction for turning on a background sound effect of the live streaming room, a control instruction for turning on a microphone, and the like. For example, the function execution data is to control the live streaming application to play music, streamer PlayerKilling (PK), communicate with another streamer, establish a chat room, and give gifts. The data for controlling the actions of the virtual object is an original speech from the user to the first client to control the actions of the virtual object or speech data obtained after the first client processes the original speech.

For example, sending the animation data corresponding to the level of the virtual object to the first client is sending the animation data of telling a joke by the virtual object to the first client. The first client receives the animation data of telling a joke by the virtual object, presents an animation that the virtual object tells the joke on the page of the live streaming room and plays audio.

For example, sending the function execution data to the first client is sending music playing data to the first client. The first client receives the music playing data to play music.

In the same way, the animation data and function execution data in the above embodiments can also be sent by the server to the second client. The animation data is played or the function corresponding to the function execution data is executed on the second client. The second client is a viewer client with a control privilege.

In an example embodiment, before the block S110, the method further includes receiving speech data including a designated wake-up word from the first client and recognizing the designated wake-up word from the first client based on the speech data. The block S110 includes receiving the speech control data provided by the first client after recognizing that there is the designated wake-up word.

The designated wake-up word is preset based on the virtual object of the first client. The designated wake-up word includes a label of the virtual object. For example, the streamer can preset the designated wake-up word for the virtual object on the host client. In detail, the designated wake-up word can be the name of the virtual object. For example, the streamer can set the name of the virtual object as "Kwai". It can be recognized whether "Kwai" is included in the speech based on the speech provided by the streamer. Recognizing that there is "Kwai" included in the speech means that recognizing that there is the designated wake-up word. Certainly, it is possible that the streamer does not set the designated wake-up word and there can be a defaulted designated wake-up word in the system, that is, the initial name of the virtual object. After the streamer calls the initial name, the system can recognize the designated wake-up word in the speech. In this embodiment, recognizing the designated wake-up word by the server improves the accuracy of recognizing the designated wake-up word.

In one of embodiments, after recognizing that there is the designated wake-up word (such as Kwai) of the first client, the server receives the speech control data provided by the first client. For example, the first client can record the speech input by the user, segment the recorded speech based on speech pauses of the user, and store speech segments in chronological order. The wake-up word recognition is performed on the speech segments sequentially. After it is recognized that there is the designated wake-up word, the first client sends a speech segment including the designated wake-up word and speech segments following that speech segment to the server. The server recognizes the designated wake-up word from the speech segment including the designated wake-up word again to improve the accuracy of recognition. After recognizing that there is the designated wake-up word, speech control data recognition is performed on other speech segments following that speech segment. In this embodiment, the designated wake-up word recognition and speech control data recognition are performed by segmenting the speech. After the server recognizes that there is the designated wake-up word, the speech segments following the speech segment including the wake-up word are directly processed. Sending time can be saved for the first client and processing efficiency of speech control data can be provided.

In addition, when the server recognizes that there is no designated wake-up word from the first client, the server sends, to the first client, an instruction of stopping sending speech control data, such that the first client stops sending the following speech information. In this embodiment, by sending the instruction of stopping sending speech control data through the server, the first client can be notified to stop recording speeches and stop sending speeches, to avoid waste of system resources.

In an example embodiment, recognizing the designated wake-up word from the first client based on the speech data includes inputting the speech data into a preset wake-up word recognition model to obtain a result of whether the speech data contains the designated wake-up word. The preset wake-up word recognition model is obtained by training a preset type of neural network and is configured to output the result of whether the speech data contains the designated wake-up word based on the input speech data.

A preset type of neural network can be trained to obtain the preset wake-up word recognition model which is configured to output the result of whether the speech data contains the designated wake-up word based on the input data. The preset type of neural network includes LeNet-5, AlexNet, ZFNet, VGG-16, GoogLeNet, ResNet, and other neural networks. Certainly, the preset type of neural network also includes a logistic regression function.

In this embodiment, the designated wake-up word is recognized by the preset wake-up word recognition model, which can improve the accuracy of recognizing the designated wake-up word.

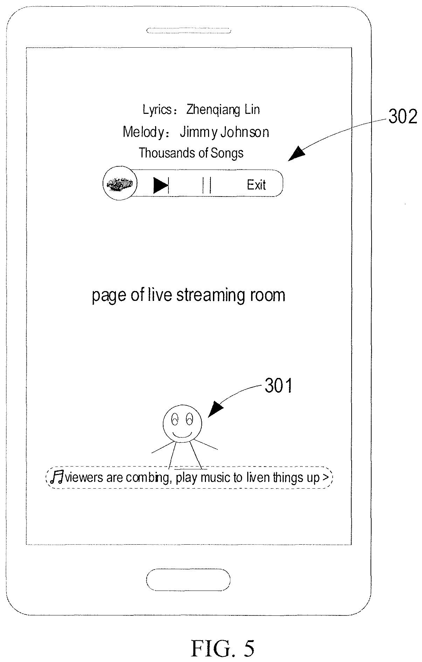

In an embodiment, the speech control data is provided by the host client and the server recognizes the speech control data to obtain a music playing instruction. Certainly, the music playing instruction can be obtained by the host client through the recognition. As illustrated in FIG. 4, the streamer provides "Kwai, Kwai, play a song". After the host client recognizes that there is the designated wake-up word "Kwai", the host client can display the speech control data of "play a song" on the page of the live streaming room (as illustrated in FIG. 4) of the host client. Further, in some examples, the speech related to "Kwai" can be sent to the server for re-recognition. After the server recognizes that there is the designated wake-up word, i.e., "Kwai", the server receives the speech control data of "play a song" sent by the host client. The server parses and recognizes the speech control data based on the speech control data to obtain the music playing instruction and sends the music playing instruction to the host client. The host client turns on a music player 302 to play music based on the music playing instruction (as illustrated in FIG. 5). Certainly, there is another way where after the host client receives the speech data of "Kwai, Kwai, play a song" provided by the streamer, the host client sends the received speech data ("Kwai, Kwai, play a song") to the server for recognition, the server recognizes the speech data, obtains the music playing instruction, and sends the music playing instruction to the host client, and the host client turns on the music player based on the music playing instruction to play music.

In an example embodiment, the speech control data includes a pet friend-making request. The pet friend-making request includes a current pet identifier and a friend pet identifier. After determining whether the level parameter of the corresponding virtual object reaches the preset level based on the speech control data, the method further includes the following. When the level parameter of the virtual object reaches the preset level, the pet friend-making request is sent to a first client corresponding to the friend pet identifier. Friend-making confirmation information is received from the first client corresponding to the friend pet identifier. A friend identifier is set for the current pet identifier and the friend pet identifier based on the friend-making confirmation information. Friend-making success information is sent to the first client corresponding to the current pet identifier and the first client corresponding to the friend pet identifier. The friend-making success information triggers the first clients to generate a friendship special effect.

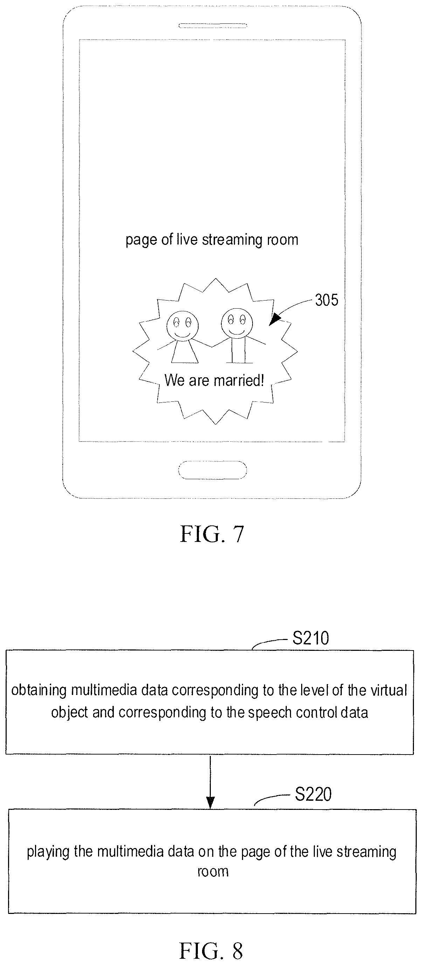

In detail, the pet friend-making includes pet becoming sworn brothers or sisters and pet getting married. After the level of the virtual object reaches a corresponding level, the pet friend-making can be performed (i.e., a skill of the pet friend-making is unlocked). The current pet identifier and the friend pet identifier can be the name of the pet or the serial number of the pet. For example, the streamer can provide speech information of "becoming sworn brothers or sisters with the pet A". The server can generate the pet friend-making request based on the speech information of "becoming sworn brothers or sisters with the pet A". The pet friend-making request includes the current pet identifier and the friend pet identifier (i.e., the identifier of the pet A). A corresponding host client is found based on the pet friend-making identifier, and the pet friend-making request is sent to the first client corresponding to the friend pet identifier. Only when the first client corresponding to the friend pet identifier provides a confirmation, the friend-making confirmation information can be received from the first client corresponding to the friend pet identifier. The server sets the friend identifier for the current pet identifier and the friend pet identifier based on the friend-making confirmation information and sends friend-making success information to the first client corresponding to the current pet identifier and the first client corresponding to the friend pet identifier. The friend-making success information is configured to trigger the host clients to generate a friendship special effect. As illustrated in FIG. 7, the pet friend-making is the pet getting married, and the friendship special effect includes images of married pets and a text effect of "we are married" that is displayed in an eye-catching way. The viewers can send blessings and gifts after viewing the friendship special effect.

In this embodiment, the interaction between the user and the virtual object in the live streaming application can be effectively improved based on the pet friend-making and the friendship special effect and the realism of the virtual object is improved.

In an example embodiment, the method for processing data of a live streaming application further includes the following. A task data packet is sent to the second client. The task data packet is for delivering food to the virtual object. After an accepting instruction is received from the second client based on the task data packet, task completion data is received from the second client. Pet food data of the virtual object is generated based on the task completion data, and an upgrade progress parameter of the virtual object is updated based on the pet food data.

In detail, the task data package is received by the viewer client. The viewer client accessing the page of the live streaming room can click task data displayed on the page to accept the task data package. After accepting the task data package, a task in the task data package is displayed on the page of the live streaming room. After accepting the task data package, it is a default that the viewer starts to perform the task. The server monitors a task completion status of the viewer client in real time. In this embodiment, the viewer accessing the live streaming room can deliver food to the virtual object by accepting the task, which realizes the interactivity with the viewer client, increases the interest of viewing the live streaming, and reduces the loss rate of viewers of the live streaming application.

In an example embodiment, after generating the pet food data of the virtual object based on the task completion data and updating the upgrade progress parameter of the virtual object based on the pet food data, the method further includes the following. When the upgrade progress parameter reaches a preset value, the level parameter of the virtual object is updated. A database of the speech control data corresponding to the virtual object is updated based on the level parameter. Growth information of the virtual object is generated based on the level parameter. The growth information of the virtual object is sent to the first client and/or the second client corresponding to the virtual object. The first client updates an appearance of the virtual object and highlights the unlocked skill based on the growth information of the virtual object. The updated appearance of the virtual object is displayed on the second client.

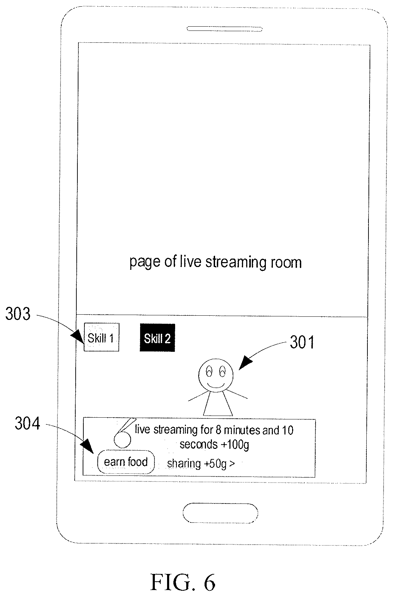

There is no particular order between updating the level parameter of the virtual object, updating the database of speech control data corresponding to the virtual object, and generating the growth information of the virtual object. The database of speech control data is configured to store all speech control data related to the virtual object. The growth information of the virtual object includes an appearance and an unlocked skill of a growing virtual object. For example, as illustrated in FIG. 6, the viewer client accepts the task through a task box 304 and executes the task. After the task is completed, the number of pieces of food of the virtual object can be increased by a preset number. For example, 50 g food is increased by sharing the live streaming. After the level of the virtual object reaches a certain level, the corresponding skill can be unlocked. Certainly, there may be multiple skills to be unlocked. As illustrated in FIG. 6, Skill 1 has been unlocked and highlighted on the page of the live streaming room. Since the level of the virtual object has not reached a corresponding level, Skill 2 is black. In this embodiment, by increasing the level of the virtual object, the interest of using the live streaming room by the streamer can be increased and the loss rate of users of the live streaming application can be reduced.

FIG. 8 is a flowchart illustrating a method for processing data of a live streaming application according to an example embodiment. As illustrated in FIG. 8, the method for processing data of a live streaming application is applied for the first client 102 and includes the following.

At block S210, multimedia data corresponding to a level of the virtual object and corresponding to speech control data is acquired.

Related descriptions about the level parameter of the virtual object, the preset level and the multimedia data can be seen from the description in foregoing embodiments.

At block S220, the multimedia data is played on a page of a live streaming room.

Descriptions of the multimedia data can be seen from the above embodiments. The page of the live streaming room can be a page of a live streaming room generated by a streamer. Playing the multimedia data on the page of the live streaming room includes presenting animation data of the virtual object in the live streaming room or executing a function related to the live streaming room. For example, an animation of giving gifts by a virtual pet to a viewer, an animation of expressing thanks by a virtual pet to a viewer, and an animation of giving a performance by a virtual pet are presented on the page of the live streamlining room, or a music playing instruction on the page of the live streaming room, a control instruction of turning on a background sound effect of the live streaming room, and a control instruction of turning on a microphone are executed.

With the method for processing data of a live streaming application according to this embodiment, the multimedia data is obtained based on a corresponding level of the virtual object corresponding to the speech control data. Different speech control data can be set depending on different levels of the virtual object, to realize the implementation of different growth stages of the virtual object. By executing the speech control data, actions of the virtual object in the live streaming room can be controlled. The visual effect of the virtual object and the interactivity between the user and the virtual object are improved.

In the application, the speech control data may be speech data obtained after the host client processes the control speech or original speech data received by the host client.

For example, the speech control data may include a speech for controlling the virtual object (i.e., the speech data processed by the host client). In this case, the speech control data includes the speech for controlling the virtual object. Correspondingly, before the block S210, the host client needs to perform the following. In response to a trigger operation for interacting with the virtual object, the speech control data (e.g., the received control speech for the virtual object) is parsed and recognized to obtain a speech control instruction, and the speech control instruction is sent to the server. The block S210 includes: receiving the multimedia data corresponding to the level of the virtual object and corresponding to the speech control instruction sent by the server.

The trigger operation for interacting with the virtual object includes clicking, by the user, a key for sending a speech or inputting a designated wake-up word by voice by the user to the host client. For example, the user long presses the screen to input the speech or the user inputs the speech of the designated wake-up word, where inputting the speech is providing by the user the input by voice. The speech for controlling the virtual object is for example a speech that is provided by the user to control the virtual object. For example, the user says "play music" to the host client. In this case, the speech control data is the speech data of "play music". The host client can actively analyze and recognize the speech data of "play music" to obtain the music playing instruction. In this embodiment, the host client recognizes the speech control instruction after acquiring the speech control data, which improves the efficiency of instruction recognition.

For example, the speech control data may include original speech data (speech data that is not processed by the host client) for controlling the virtual object. In this embodiment, the speech control data includes a control speech for the virtual object. Before the block S210, the method includes sending the speech control data (e.g., the original speech data for controlling the virtual object) including the control speech for the virtual object to the server in response to the trigger operation for interacting with the virtual object. The block S210 includes: receiving the multimedia data corresponding to the level of the virtual object and corresponding to the speech control data sent by the server.

The speech control data is the original speech data sent by the user to the host client. For example, the user says "Kwai, Kwai, tell a joke" to the host client. The host client obtains and sends the speech control data of "Kwai, Kwai, tell a joke" to the server. The server analyzes and recognizes the speech control data to obtain the speech control instruction of "tell a joke".

In this embodiment, the speech control data including the control speech for the virtual object is sent to the server, and the speech control data is analyzed through the server to obtain the speech control instruction, which can improve the accuracy of analyzing the speech control data.

In one of embodiments, the multimedia data includes at least one of animation data of the virtual object and function execution data related to the live streaming application. The speech control data includes at least one of data for controlling actions of the virtual object and function control data related to the live streaming application. The speech control data is in one-to-one correspondence with the multimedia data. Descriptions of the animation data of the virtual object, the function execution data related to the live streaming application, the data for controlling the actions of the virtual object, and the function control data related to the live streaming application can be seen from the foregoing embodiments.

In one of the embodiments, the block S210 includes: obtaining animation data corresponding to a level of the virtual object and corresponding to the speech control data. The block S220 includes: playing the animation data on the page of the live streaming room. In this embodiment, by acquiring and sending the animation data corresponding to the level of the virtual object and corresponding to the speech control data to the host client, the interaction with the virtual object on the page of the live streaming room can be realized. The speech control data is sent by the host client to control the virtual object by the streamer. The realism of the virtual object is enhanced, which is beneficial to increase the enthusiasm of the streamer and improve the quality of the program of the streamer.

In one of the embodiments, the block S210 includes: obtaining function execution data corresponding to the speech control data. The block S220 includes: executing a function corresponding to the function execution data on the page of the live streaming room. In this embodiment, the function execution data is sent to the host client to control an operation of the live streaming application of the host client. The control of the live streaming application through the virtual object is realized. Compared with directly controlling the live streaming application through the speech instruction, the visual quality and interest of the control of the live streaming application are improved.

In one of the embodiments, the method for processing data of a live streaming application further includes the following. Speech data including a designated wake-up word is sent to the server. The speech control data is analyzed and recognized in response to the trigger operation for interacting with the virtual object to obtain the speech control instruction, upon receiving the information that the designated wake-up word is correct from the server. Descriptions of the speech data of the designated wake-up word and the trigger operation for interacting with the virtual object can be seen from the above-mentioned embodiments. In this embodiment, the server recognizes the designated wake-up word, which improves the accuracy of recognizing the designated wake-up word.

In one of the embodiments, the method for processing data of a live streaming application further includes acquiring the speech input by the user; determining whether the designated wake-up word is included by performing preliminary recognition based on the speech; and sending the speech data including the designated wake-up word to the server when the speech includes the designated wake-up word. The user inputs the speech to the first client by voice. In this embodiment, the first client performs preliminary recognition on the designated wake-up word and the server performs re-recognition on the designated wake-up word, which improves the accuracy of the recognition of the designated wake-up word.

In one of the embodiments, the method for processing data of a live streaming application further includes the following. The speech input by the user is received. The speech is input into a preset wake-up word recognition model to obtain a result of whether the speech contains the designated wake-up word. The preset wake-up word recognition model is obtained by training a preset type of neural network and is configured to output the result of whether the speech contains the designated wake-up word based on the input speech. When the speech includes the designated wake-up word, the speech control data is analyzed and recognized in response to the trigger operation for interacting with the virtual object to obtain the speech control instruction.

By training a preset type of neural network, the preset wake-up word recognition model is obtained. The preset wake-up word recognition model is configured to output the result of whether the speech contains the designated wake-up word based on the input speech. The preset type of neural network includes LeNet-5, AlexNet, ZFNet, VGG-16, GoogLeNet, ResNet, and other neural networks. Certainly, the preset type of neural network also includes a logistic regression function.

In this embodiment, the first client uses a preset wake-up word recognition model to recognize the wake-up word, which improves the accuracy and efficiency of recognizing the wake-up word.

In one of the embodiments, the speech control data includes a pet friend-making request. The pet friend-making request includes a current pet identifier and a friend pet identifier. After sending the speech control instruction to the server, the method further includes: receiving friend-making success information; adding the friend pet identifier to a friend list of the virtual object based on the friend-making success information, generating a friendship special effect, and presenting the friendship special effect on the page of the live streaming room. Descriptions of the friendship special effect and presenting the friendship special effect on the page of the live streaming room can be seen from the above embodiments. In this embodiment, the interactivity between the user and the virtual object in the live streaming application can be effectively improved and the realism of the virtual object is improved.

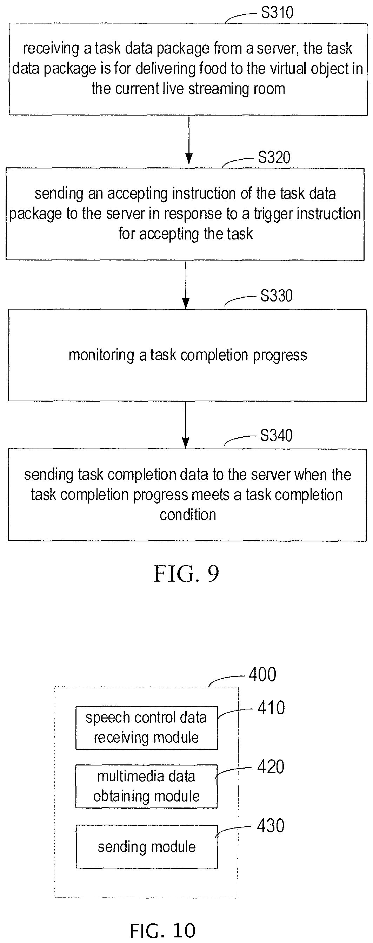

FIG. 9 is a flowchart illustrating a method for processing data of a live streaming application according to an example embodiment. As illustrated in FIG. 9, the method for processing data of a live streaming application is applied to the second client 106 and includes the following.

At block S310, a task data packet sent by the server is received. The task data packet is for delivering food to the virtual object in a current live streaming room.

The task data package includes at least one task. For example, the task data package includes watching the live streaming for 10 minutes, sharing the live streaming, giving gifts to the streamer, or joining a fan club. A viewer account in the current live streaming room can deliver food to the virtual object of the streamer after completing the task data package. The task data package can be displayed on the host client in the form of reminder message, or the task data package can be displayed in the form of virtual button. The display manner of the task data package on the host client is not limited here.

At block S320, an accepting instruction of the task data package is sent to the server in response to the trigger instruction of accepting the task.

The trigger instruction for accepting the task is generated by clicking the task data packet by the viewer. As illustrated in FIG. 6, for example, the viewer can click the virtual key for earning food after seeing the task data package for earning food, the trigger instruction for accepting the task is generated. Certainly, in order to prevent the viewer from clicking the virtual button for earning food by mistake, corresponding description information of the task data package for earning food can be displayed upon clicking a virtual key for earning food, to allow the viewer to confirm again. The viewer can click a confirmation key which indicates that the task is accepted, and the trigger instruction for accepting the task can be generated.

At block S330, a task completion progress is monitored. The task completion progress includes completion progresses of one or more tasks.

The task completion progress indicates a completion situation of the task. After the viewer accepts the task, the viewer client will monitor the completion situation of the task in real time. For example, when the task data package is watching the live streaming for 10 minutes, it is monitored whether the viewer client stays on the page of the live streaming room for 10 minutes. When the task data package is sharing the live streaming, it is monitored whether the viewer triggers a sharing operation of the current live streaming.

At block S340, when the task completion progress meets a task completion condition, the task completion data is sent to the server. The task completion data is configured to generate pet food data of the virtual object, and the pet food data is configured to update an upgrade progress parameter of the virtual object.

The task completion condition can be set based on a corresponding task. For example, when the task data package is watching the live streaming for 10 minutes, whether the viewer client stays on the page of the live streaming room for 10 minutes is the task completion condition. The task completion data includes serial numbers of completed tasks. The corresponding virtual food is generated based on the serial numbers of the completed tasks. For example, when the task data package is sharing live streaming + 10 g food, 10 g food is added for the corresponding virtual object based on the task completion data.

In one of the embodiments, the method for processing data of the live streaming application further includes: obtaining the multimedia data corresponding to the level of the virtual object and corresponding to the speech control data and playing the multimedia data on the page of the live streaming room. Descriptions of the level parameter of the virtual object, the preset level, and the multimedia data can be seen from foregoing embodiments. The page of the live streaming room may be a page of the live streaming room generated by the streamer. Playing the multimedia data on the page of the live streaming room includes presenting the animation data of the virtual object in the live streaming room or performing a function related to the live streaming application. For example, an animation of giving gifts by a virtual pet to a viewer, an animation of expressing thanks by a virtual pet to a viewer, and an animation of giving a performance by a virtual pet to a viewer can be presented on the page of the live streaming room, or a music playing instruction or a control instruction for turning on a background sound effect can be executed on the page of the live streaming room.

It is to be understood that although various blocks in the flowcharts of FIGS. 2-3 and 8-9 are displayed in sequence as indicated by arrows, these blocks are not necessarily performed in the order indicated by the arrows. Unless a specific description in the disclosure, there is no strict order for executing these blocks. These blocks can be executed in other orders. Moreover, at least part of the blocks in FIGS. 2-3 and 8-9 can include multiple blocks or multiple stages. These blocks or stages are not necessarily executed at the same time, but can be executed at different times. These blocks or stages are not necessarily carried out sequentially. Rather, these blocks or stages may be executed in turn or alternately with other blocks or at least a part of blocks or stages in other blocks.

FIG. 10 is a block diagram illustrating an apparatus for processing data of a live streaming application according to an example embodiment. The apparatus 400 includes a speech control data receiving module 410, a multimedia data obtaining module 420, and a sending module 430.

The speech control data receiving module 410 is configured to receive speech control data provided by the first client.

The multimedia data obtaining module 420 is configured to obtain multimedia data corresponding to a level of the virtual object and corresponding to the speech control data.

The sending module 430 is configured to send the multimedia data to the first client.

In an example embodiment, the apparatus 400 for processing data of a live streaming application further includes a level determining module. The level determining module is configured to determine whether a level parameter of a corresponding virtual object reaches a preset level based on the speech control data. Each piece of the speech control data corresponds to a respective preset level of the virtual object. The multimedia data obtaining module 430 is further configured to obtain the multimedia data corresponding to the level of the virtual object and corresponding to the speech control data when the level parameter of the virtual object reaches the preset level.

In an example embodiment, the speech control data includes a control speech for the virtual object. The speech control data receiving module 410 includes a control data receiving unit and a parsing unit. The control data receiving unit is configured to receive the speech control data including the control speech for the virtual object provided by the first client. The parsing unit is configured to perform the instruction parsing on the speech control data to obtain a speech control instruction.

In an example embodiment, the multimedia data includes at least one of animation data of the virtual object and function execution data related to a live streaming application. The speech control data includes at least one of data for controlling actions of the virtual object and data related to the live streaming application. The speech control data is in one-to-one correspondence with the multimedia data.

In an example embodiment, the multimedia data obtaining module 420 is further configured to obtain animation data corresponding to the level of the virtual object and corresponding to the speech control data. The sending module 430 is further configured to send the animation data corresponding to the level of the virtual object to the first client.

In an example embodiment, the multimedia data obtaining module 420 is further configured to obtain the function execution data corresponding to the speech control data. The sending module 430 is further configured to send the function execution data to the first client.

In an example embodiment, the apparatus for processing data of a live streaming application further includes a speech data receiving module and a recognizing module. The speech data receiving module is configured to receive the speech data including a designated wake-up word from the first client. The recognizing module is configured to perform the designated wake-up word from the first client based on the speech data. The speech control data receiving module is further configured to receive the speech control data provided by the first client after recognizing that there is the designated wake-up word.

In an example embodiment, the recognizing module is further configured to input the speech data into a preset wake-up word recognition model to obtain a result of whether the speech data contains the designated wake-up word. The preset wake-up word recognition model is obtained by training a preset type of neural network and is configured to output the result of whether the speech data contains the designated wake-up word based on the input speech data.

In an example embodiment, the speech control data includes a pet friend-making request. The pet friend-making request includes a current pet identifier and a friend pet identifier. The apparatus 400 further includes a pet friend-making request sending module, a friend-making confirmation receiving module, and a friend-making success information sending module. The pet friend-making request sending module is configured to send the pet friend-making request to the first client corresponding to the friend pet identifier when the level parameter of the virtual object reaches the preset level. The friend-making confirmation receiving module is configured to receive friend-making confirmation information from a first client corresponding to the friend pet identifier. The friend-making success information sending module is configured to set a friend identifier for the current pet identifier and the friend pet identifier based on the friend-making confirmation information and send the friend-making success information to the first client corresponding to the current pet identifier and the first client corresponding to the friend pet information. The friend-making success information is configured to trigger the first clients to generate a friend special effect.

In an example embodiment, the sending module 430 is further configured to send the multimedia data to a second client. The second client is a client within a same live streaming room as the first client.

In an example embodiment, the apparatus 400 for processing data of a live streaming application further includes a task data packet sending module, a task completion data receiving module, and an upgrade progress updating module. The task data package sending module is configured to send a task data packet to the second client. The task data packet is for delivering food to the virtual object. The task completion data receiving module is configured to receive task completion data from the second client. The upgrade progress updating module is configured to generate pet food data of the virtual object based on the task completion data and update an upgrade progress parameter of the virtual object based on the pet food data.

In an example embodiment, the apparatus 400 for processing data of a live streaming application further includes a level parameter updating module, a database updating module, a growth information generating module and a growth information sending module. The level parameter updating module is configured to update the level parameter of the virtual object when the upgrade progress parameter reaches a preset value. The database updating module is configured to update the database of the speech control data corresponding to the virtual object based on the level parameter. The growth information generating module is configured to generate the growth information of the virtual object based on the level parameter. The growth information sending module is configured to send the growth information of the virtual object to the first client and/or the second client corresponding to the virtual object.

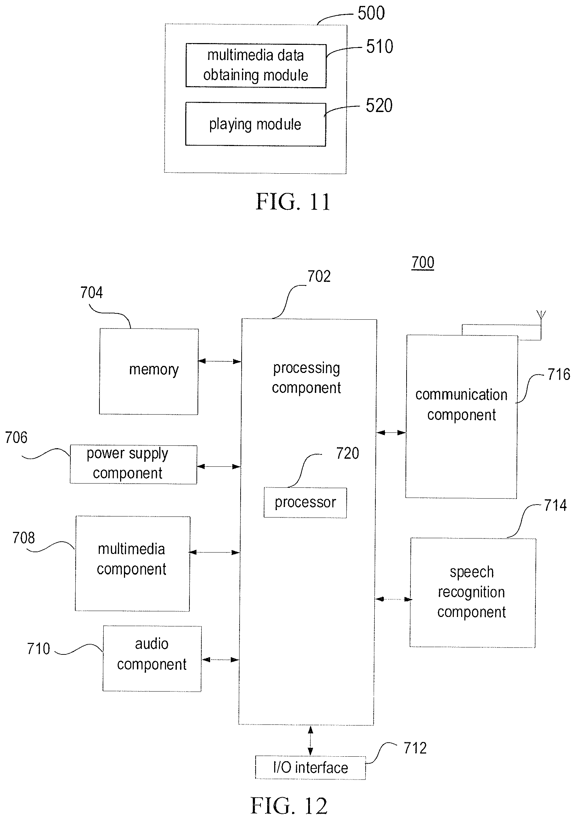

FIG. 11 is a block diagram illustrating an apparatus for processing data of a live streaming application according to an example embodiment. The apparatus 500 includes a multimedia data obtaining module 510 and a playing module 520.

The multimedia data obtaining module 510 is configured to obtain the multimedia data corresponding to the level of the virtual object and corresponding to the speech control data.

The playing module 520 is configured to play the multimedia data on the page of the live streaming room.

In an example embodiment, the speech control data includes the speech for controlling the virtual object. The apparatus 500 further includes a parsing and recognizing module and an instruction sending module. The parsing and recognizing module is configured to parse and recognize the speech control data in response to a trigger operation for interacting with the virtual object to obtain a speech control instruction. The instruction sending module is configured to send the speech control instruction to the server. The multimedia data obtaining module is further configured to receive the multimedia data corresponding to the level of the virtual object and corresponding to the speech control instruction sent by the server.

In an example embodiment, the speech control data includes a control speech for the virtual object. The apparatus 500 further includes a speech control data sending module configured to send the speech control data including the control speech of the virtual object to the server in response to the trigger operation for interacting with the virtual object. The multimedia data obtaining module is further configured to receive the multimedia data corresponding to the level of the virtual object and corresponding to the speech control data sent by the server.

In an example embodiment, the multimedia data includes at least one of animation data of the virtual object and the function execution data related to the live streaming application. The speech control data includes at least one of data for controlling actions of the virtual object and function control data related to the live streaming application. The speech control data is in one-to-one correspondence with the multimedia data.

In an example embodiment, the multimedia data obtaining module 510 is configured to acquire the animation data corresponding to the level of the virtual object and corresponding to the speech control data. The playing module 520 is further configured to play the animation data on the page of the live streaming room.

In an example embodiment, the multimedia data obtaining module 510 is further configured to obtain the function execution data corresponding to the speech control data. The playing module 520 is further configured to execute a function corresponding to the function execution data on a page of the live streaming room.

In an example embodiment, the apparatus 500 for processing data of a live streaming application further includes a speech data sending module. The speech data sending module is configured to send speech data including the designated wake-up word to the server. The parsing and recognizing module is further configured to parse and recognize the speech control data in response to the trigger operation for interacting with the virtual object when the information that the designated wake-up word is correct is received from the server.

In an example embodiment, the apparatus 500 for processing data of a live streaming application further includes: a speech inputting module and a preliminary recognizing module. The speech inputting module is configured to obtain the speech input by the user. The preliminary recognizing module is configured to determine whether the designated wake-up word is included by performing preliminary recognition based on the speech. The speech data sending module is further configured to send the speech data including the designated wake-up word to the server when the speech includes the designated wake-up word.

In an example embodiment, the apparatus 500 for processing data of a live streaming application further includes a speech inputting module and a wake-up word recognizing module. The speech inputting module is configured to obtain a speech input by the user. The wake-up word recognizing module is configured to input the speech to a preset wake-up word recognition model to obtain a result of whether the speech contains the designated wake-up word. The preset wake-up word recognition model is obtained by training a preset type of neural network and is configured to output the result of whether the designated wake-up word is included based on the input speech. The parsing and recognizing module is further configured to parse and recognize the speech control data in response to the trigger operation for interacting with the virtual object to obtain the speech control instruction when the speech includes the designated wake-up word.

In an example embodiment, the speech control data includes a pet friend-making request. The pet friend-making request includes a current pet identifier and a friend pet identifier. The apparatus 500 further includes: a friend-making success information receiving module and a friendship special effect presenting module. The friend-making success information receiving module is configured to receive friend-making success information. The friendship special effect presenting module is configured to add the friend pet identifier to a friend list of the virtual object based on the friend-making success information, generate a friendship special effect, and present the friendship special effect on the page of the live streaming room.

The specific limitation on the apparatus for processing data of a live streaming application of the foregoing embodiments can be seen from those of the method for processing data of a live streaming application, which will not be repeated here. The various modules in the apparatus for processing data of a live streaming application can be implemented entirely or partially by software, hardware, and a combination thereof. The above-mentioned modules may be embedded in the form of hardware or independent of the processor in the computer device or may be stored in the memory of the computer device in the form of software, such that the processor can call and execute the operations corresponding to the above-mentioned modules.

FIG. 12 is a schematic diagram illustrating an internal structure of an electronic device 700 according to an example embodiment. For example, the device 700 may be a mobile phone, a computer, a digital broadcasting terminal, a messaging device, a game console, a tablet device, a medical device, a fitness device, a personal digital assistant, and the like.

As illustrated in FIG. 12, the device 700 may include one or more of the following components: a processing component 702, a memory 704, a power component 706, a multimedia component 708, an audio component 710, an input/output (I/O) interface 712, and a speech recognition component 714 and a communication component 716.

The processing component 702 generally controls the overall operations of the device 700, such as operations associated with display, telephone calls, data communications, camera operations, and recording operations. The processing component 702 may include one or more processors 720 to execute instructions to complete all or part of the steps of the foregoing method. In addition, the processing component 702 may include one or more modules to facilitate the interaction between the processing component 702 and other components. For example, the processing component 702 may include a multimedia module to facilitate the interaction between the multimedia component 708 and the processing component 702.

The memory 704 is configured to store various types of data to support the operation of the device 700. Examples of such data include instructions for operating any application or method on the device 700, contact data, phone book data, messages, pictures, videos, and the like. The memory 704 can be implemented by any type of volatile or non-volatile storage device or a combination thereof, such as static random-access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 706 provides power to various components of the device 700. The power supply component 706 may include a power management system, one or more power supplies, and other components associated with the generation, management, and distribution of power for the device 700.

The multimedia component 708 includes a screen that provides an output interface between the device 700 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 708 includes a front camera and/or a rear camera. When the device 700 is in an operation mode, such as a shooting mode or a video mode, the front camera and/or the rear camera can receive external multimedia data. Each front camera and rear camera can be a fixed optical lens system or have focal length and optical zoom capabilities.

The audio component 710 is configured to output and/or input audio signals. For example, the audio component 710 includes a microphone (MIC). When the device 700 is in an operation mode, such as a call mode, a recording mode, and a speech recognition mode, the microphone is configured to receive external audio signals. The received audio signal can be further stored in the memory 704 or sent via the communication component 716. In some embodiments, the audio component 710 further includes a speaker for outputting audio signals.

The I/O interface 712 provides an interface between the processing component 702 and a peripheral interface module. The above-mentioned peripheral interface module may be a keyboard, a click wheel, a button, and the like. These buttons may include, but are not limited to: home button, volume button, start button, and lock button.

The speech recognition component 714 includes a semantic recognition library, which stores related words for recognizing the designated wake-up word and is used for preliminary recognizing the designated wake-up word.

The communication component 716 is configured to facilitate wired or wireless communication between the device 700 and other devices. The device 700 can access a wireless network based on a communication standard, such as WiFi, an operator network (such as 2G, 3G, 4G, or 5G), or a combination thereof. In an example embodiment, the communication component 716 receives a broadcast signal or broadcast-related information from an external broadcast management system via a broadcast channel. In an example embodiment, the communication component 716 further includes a near field communication (NFC) module to facilitate short-range communication.

In an example embodiment, the device 700 may be implemented as one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic components, used to perform the above-mentioned methods.

In an example embodiment, there is also provided a non-transitory computer-readable storage medium including instructions, such as the memory 704 including instructions. The foregoing instructions may be executed by the processor 720 of the device 700 to implement the foregoing methods. For example, the non-transitory computer-readable storage medium may be ROM, random-access memory (RAM), CD-ROM, magnetic tape, floppy disk, optical data storage device, and the like.

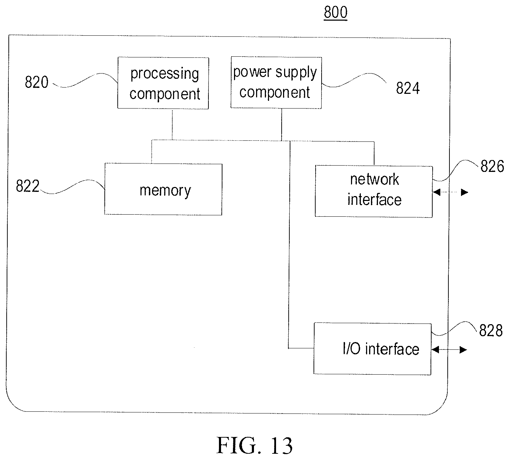

FIG. 13 is a schematic diagram illustrating an internal structure of an electronic device 800 according to another example embodiment. For example, the device 800 may be a server. As illustrated in FIG. 13, the device 800 includes a processing component 820, which further includes one or more processors, and a memory resource represented by a memory 822 for storing instructions that can be executed by the processing component 820, such as application programs. The application program stored in the memory 822 may include one or more modules each corresponding to a set of instructions. In addition, the processing component 820 is configured to execute instructions to execute the method for processing data of a live streaming application described in the foregoing embodiments.

The device 800 may also include a power supply component 824 configured to perform power management of the device 800, a wired or wireless network interface 826 configured to connect the device 800 to a network, and an input/output (I/O) interface 828. The device 800 can operate an operating system stored in the memory 822, such as Windows ServerTM, Mac OS XTM, UnixTM, LinuxTM, FreeBSDTM or the like.

In an example embodiment, there is also provided a storage medium including instructions, such as a memory 822 including instructions, which may be executed by the processor of the device 800 to implement the method for processing data of a live streaming application described in the foregoing embodiments. The storage medium may be a non-transitory computer-readable storage medium. For example, the non-transitory computer-readable storage medium may be ROM, random-access memory (RAM), CD-ROM, magnetic tape, floppy disk, optical data storage device, or the like.

Those skilled in the art will easily obtain other embodiments of the disclosure after considering the specification and practicing the application disclosed herein. The disclosure is intended to cover any variations, uses, or adaptive changes of the disclosure. These variations, uses, or adaptive changes follow the general principles of the disclosure and include common knowledge or conventional technical means in the art that are not disclosed in the disclosure. The description and the embodiments are to be regarded as example only, and the true scope and spirit of the disclosure are pointed out by the appended claims.

It is to be understood that the disclosure is not limited to the precise structure that has been described above and illustrated in the drawings, and various modifications and changes can be made without departing from the scope of the disclosure. The scope of the disclosure is only limited by the appended claims.

## Claims

1. A method for processing data of a live streaming application, comprising:
receiving speech control data provided by a first client;
obtaining multimedia data corresponding to a level of a virtual object and corresponding to the speech control data; and
sending the multimedia data to the first client.

2. The method of claim 1, wherein, after receiving the speech control data provided by the first client, the method further comprises:
determining whether a level parameter of the corresponding virtual object reaches a preset level based on the speech control data, each piece of speech control data corresponding to a respective preset level of the virtual object; and
wherein said obtaining the multimedia data corresponding to the level of the virtual object and corresponding to the speech control data comprises:
obtaining the multimedia data corresponding to the level of the virtual object and corresponding to the speech control data when the level parameter of the virtual object reaches the preset level.

3. The method of claim 1, wherein the speech control data comprises a control speech for the virtual object; and
said receiving the speech control data provided by the first client comprises:
receiving the speech control data comprising the control speech for the virtual object and provided by the first client; and
obtaining a speech control instruction by performing instruction parsing on the speech control data.

4. The method of any one of claims 1 to 3, wherein the multimedia data comprises at least one of animation data of the virtual object and function execution data related to the live streaming application; and
the speech control data comprises at least one of data for controlling actions of the virtual object and function control data related to the live streaming application, the speech control data being in one-to-one correspondence with the multimedia data.

5. The method of claim 4, wherein said obtaining the multimedia data corresponding to the level of the virtual object and corresponding to the speech control data comprises:
obtaining animation data corresponding to the level of the virtual object and corresponding to the speech control data; and
wherein said sending the multimedia data to the first client comprises:
sending the animation data corresponding to the level of the virtual object to the first client.

6. The method of claim 4 or 5, wherein said obtaining the multimedia data corresponding to the level of the virtual object and corresponding to the speech control data comprises:
obtaining function execution data corresponding to the speech control data; and wherein said sending the multimedia data to the first client comprises:
sending the function execution data to the first client.

7. The method of claim 1, wherein before receiving the speech control data provided by the first client, the method further comprises:
receiving speech data comprising a designated wake-up word from the first client; and
recognizing the designated wake-up word from the first client based on the speech data; and
wherein said receiving the speech control data provided by the first client comprises:
receiving the speech control data provided by the first client after recognizing that there is the designated wake-up word.

8. The method of claim 7, wherein said recognizing the designated wake-up word from the first client based on the speech data comprises:
obtaining a result of whether the speech data comprises the designated wake-up word by inputting the speech data into a preset wake-up word recognition model, the preset wake-up word recognition model being obtained by training a preset type of neural network and being configured to output the result of whether the speech data comprises the designated wake-up word based on the input speech data.

9. The method of claim 2, wherein the speech control data comprises a pet friend-making request, the pet friend-making request comprising a current pet identifier and a friend pet identifier and
wherein after determining whether the level parameter of the virtual object reaches the preset level based on the speech control data, the method further comprises:
sending the pet friend-making request to a first client corresponding to the friend pet identifier when the level parameter of the virtual object reaches the preset level;
receiving friend-making confirmation information from the first client corresponding to the friend pet identifier; and
setting a friend identifier to the current pet identifier and the friend pet identifier based on the friend-making confirmation information and sending friend-making success information to the first client corresponding to the current pet identifier and the first client corresponding to the friend pet information, the friend-making success information being configured to trigger the first clients to generate a friendship special effect.

10. The method of claim 1, further comprising:
sending the multimedia data to a second client, the second client being a client within the same live streaming room as the first client.

11. The method of claim 1, further comprising:
sending a task data package to a second client, the task data package is for delivering food to the virtual object;
receiving task completion data from the second client; and
generating pet food data of the virtual object based on the task completion data, and updating an upgrade progress parameter of the virtual object based on the pet food data.

12. The method of claim 11, wherein after updating the upgrade progress parameter of the virtual object based on the pet food data, the method further comprises:
updating a level parameter of the virtual object when the upgrade progress parameter reaches a preset value;
updating a database of the speech control data corresponding to the virtual object based on the level parameter;
generating growth information of the virtual object based on the level parameter; and
sending the growth information of the virtual object to the first client and/or the second client corresponding to the virtual object.

13. A method for processing data of a live streaming application, comprising:
obtaining multimedia data corresponding to a level of a virtual object and corresponding to speech control data; and
playing the multimedia data on a page of a live streaming room.

14. The method of claim 13, wherein the speech control data comprises a speech for controlling the virtual object; and
wherein before obtaining the multimedia data corresponding to the level of the virtual object and corresponding to the speech control data, the method further comprises:
obtaining a speech control instruction by parsing and recognizing the speech control data in response to a trigger operation for interacting with the virtual object; and
sending the speech control instruction to a server;
wherein said obtaining the multimedia data corresponding to the level of the virtual object and corresponding to the speech control data comprises:
receiving the multimedia data corresponding to the level of the virtual object and corresponding to the speech control instruction from the server.

15. The method of claim 13, wherein the speech control data comprises a control speech for the virtual object; and
wherein before obtaining the multimedia corresponding to the level of the virtual object and corresponding to the speech control data, the method further comprises:
sending the speech control data comprising the control speech for the virtual object to a server in response to a trigger operation for interacting with the virtual object; and
wherein said obtaining the multimedia data corresponding to the level of the virtual object and corresponding to the speech control data comprises:
receiving the multimedia data corresponding to the level of the virtual object and corresponding to the speech control data from the server.

16. The method of any one of claims 13 to 15, wherein the multimedia data comprises at least one of animation data of the virtual object and function execution data related to a live streaming application;
the speech control data comprises at least one of data for controlling actions of the virtual object and function control data related to the live streaming application, the speech control data being in one-to-one correspondence with the multimedia data.

17. The method of claim 16, wherein said obtaining the multimedia data corresponding to the level of the virtual object and corresponding to the speech control data comprises:
obtaining animation data corresponding to the level of the virtual object and corresponding to the speech control data; and
wherein said playing the multimedia data on the page of the live streaming room comprises:
playing the animation data on the page of the live streaming room.

18. The method of claim 16 or 17, wherein said obtaining the multimedia data corresponding to the level of the virtual object and corresponding to the speech control data comprises:
obtaining function execution data corresponding to the speech control data; and wherein said playing the multimedia data on the page of the live streaming room comprises:
executing a function corresponding to the function execution data on the page of the live streaming room.

19. The method of claim 14, further comprising:
sending speech data comprising a designated wake-up word to the server; and
obtaining the speech control instruction by parsing and recognizing the speech control data in response to the trigger operation for interacting with the virtual object when information that the designated wake-up word is correct is received from the server.

20. The method of claim 19, further comprising:
obtaining a speech input by a user;
determining whether the designated wake-up word is comprised by performing preliminary recognition based on the speech; and
sending the speech data comprising the designated wake-up word to the server when the speech comprises the designated wake-up word.

21. The method of claim 14, further comprising:
receiving a speech input by a user;
obtaining a result of whether the speech contains a designated wake-up word by inputting the speech into a preset wake-up word recognition model; the preset wake-up word recognition model being obtained by training a preset type of neural network and being configured to output the result of whether the speech contains the designated wake-up word based on the input speech; and
obtaining the speech control instruction by parsing and recognizing the speech control data in response to the trigger operation for interacting with the virtual object when the speech contains the designated wake-up word.

22. The method of claim 14, wherein the speech control data comprises a pet friend-making request, and the pet friend-making request comprises a current pet identifier and a friend pet identifier;
wherein after sending the speech control instruction to the server, the method further comprises:
receiving friend-making success information; and
adding the friend pet identifier to a friend list of the virtual object based on the friend-making success information, generating a friendship special effect, and presenting the friendship special effect on the page of the live streaming room.

23. An apparatus for processing data of a live streaming application, comprising:
a speech control data receiving module, configured to receive speech control data provided by a first client;
a multimedia data obtaining module, configured to obtain multimedia data corresponding to a level of a virtual object and corresponding to the speech control data; and
a sending module, configured to send the multimedia data to the first client.

24. The apparatus of claim 23, further comprising:
a level determining module, configured to determine whether a level parameter of the corresponding virtual object reaches a preset level based on the speech control data, each piece of speech control data corresponding to a respective preset level; and
a multimedia data obtaining module, configured to obtain the multimedia data corresponding to the level of the virtual object and corresponding to the speech control data when the level parameter of the virtual object reaches the preset level.

25. The apparatus of claim 23, wherein the speech control data comprises a control speech for the virtual object; and
wherein the speech control data receiving module comprises:
a control data receiving unit, configured to receive the speech control data comprising the control speech for the virtual object provided by the first client; and
a parsing unit, configured to obtain a speech control instruction by performing instruction parsing on the speech control data.

26. The apparatus of any one of claims 23 to 25, wherein the multimedia data comprises at least one of animation data of the virtual object and animation data related to a live streaming application; and
the speech control data comprises at least one of data for controlling actions of the virtual object and function control data related to the live streaming application; the speech control data being in one-to-one correspondence with the multimedia data.

27. The apparatus of claim 26, wherein the multimedia data obtaining module is further configured to obtain animation data corresponding to the level of the virtual object and corresponding to the speech control data; and
the sending module is further configured to send the animation data corresponding to the level of the virtual object to the first client.

28. The apparatus of claim 26 or 27, wherein the multimedia data obtaining module is further configured to obtain function execution data corresponding to the speech control data; and
the sending module is further configured to send the function execution data to the first client.

29. The apparatus of claim 23, further comprising:
a speech data receiving module, configured to receive speech data comprising a designated wake-up word from the first client; and
a recognizing module, configured to recognize the designated wake-up word from the first client based on the speech data;
wherein the speech control data receiving module is further configured to receive the speech control data provided by the first client when recognizing that there is the designated wake-up word.

30. The apparatus of claim 29, wherein the recognizing module is further configured to obtain a result of whether the speech data comprises the designated wake-up word by inputting the speech data into a preset wake-up word recognition model, the preset wake-up word recognition model being obtained by training a preset type of neural network and being configured to output the result of whether the speech data comprises the designated wake-up word based on the input speech data.

31. The apparatus of claim 24, wherein the speech control data comprises a pet friend-making request, the pet friend-making request comprising a current pet identifier and a friend pet identifier; and
wherein the apparatus further comprises
a pet friend-making request sending module, configured to send a pet friend-making request to a first client corresponding to the friend pet identifier when the level parameter of the virtual object reaches the preset level;
a friend-making confirmation information receiving module, configured to receive friend-making confirmation information from the first client corresponding to the friend pet identifier; and
a friend-making success information sending module, configured to set a friend identifier to the current pet identifier and the friend pet identifier based on the friend-making confirmation information and send friend-making success information to the first client corresponding to the current pet identifier and the first client corresponding to the friend pet identifier, the friend-making success information being configured to trigger the first clients to generate a friendship special effect.

32. The apparatus of claim 23, wherein the sending module is further configured to send the multimedia data to a second client, the second client being a client within the same live streaming room with the first client.

33. The apparatus of claim 23, further comprising:
a task data package sending module, configured to send a task data packet to a second client, the task data packet being for delivering food to a virtual object;
a task completion data receiving module, configured to receive task completion data from the second client; and
an upgrade progress updating module, configured to generate pet food data of the virtual object based on the task completion data and update an upgrade progress parameter of the virtual object based on the pet food data.

34. The apparatus of claim 33, further comprising:
a level parameter updating module, configured to update a level parameter of the virtual object when the upgrade progress parameter reaches a preset value;
a database updating module, configured to update a database of the speech control data corresponding to the virtual object based on the level parameter;
a growth information generating module, configured to generate growth information of the virtual object based on the level parameter; and
a growth information sending module, configured to send the growth information of the virtual object to the first client and/or the second client corresponding to the virtual object.

35. An apparatus for processing data of a live streaming application, comprising:
a multimedia data receiving module, configured to receive multimedia data corresponding to a level of a virtual object and corresponding to speech control data; and
a playing module, configured to play the multimedia data on a page of a live streaming room.

36. The device of claim 35, wherein the speech control data comprises a speech for controlling the virtual object; and
wherein the apparatus further comprises:
a parsing and recognizing module, configured to obtain a speech control instruction by parsing and recognizing the speech control data in response to a trigger operation for interacting with the virtual object; and
an instruction sending module, configured to send the speech control instruction to a server;
wherein the multimedia data obtaining module is further configured to receive the multimedia data corresponding to the level of the virtual object and corresponding to the speech control instruction from the server.

37. The apparatus of claim 35, wherein the speech control data comprising a control speech for the virtual object; and
wherein the device further comprises a speech control data sending module, configured to send the speech control data comprising the control speech for the virtual object to a server in response to a trigger operation for interacting with the virtual object; and
wherein the multimedia data obtaining module is further configured to receive the multimedia data corresponding to the level of the virtual object and corresponding to the speech control data sent from the server.

38. The apparatus of any one of claims 35 to 37, wherein the multimedia data comprises at least one of animation data of the virtual object and function execution data related to a live streaming application; and
the speech control data comprises at least one of data for controlling actions of the virtual object and function control data related to the live streaming application; the speech control data being in one-to-one correspondence with the multimedia data.

39. The apparatus of claim 38, wherein the multimedia data obtaining module is further configured to obtain animation data corresponding to the level of the virtual object and corresponding to the speech control data; and
the playing module is further configured to play the animation data on the page of the live streaming room.

40. The apparatus of claim 38 or 39, wherein the multimedia data obtaining module is further configured to obtain function execution data corresponding to the speech control data; and
the playing module is further configured to execute a function corresponding to the function execution data on the page of the live streaming room.

41. The apparatus of claim 36, further comprising:
a speech data sending module, configured to send speech data comprising a designated wake-up word to the server;
wherein the parsing and recognizing module is further configured to obtain the speech control instruction by parsing and recognizing the speech control data in response to the trigger operation for interacting with the virtual object when receiving information that the designated wake-up word is correct from the server.

42. The apparatus of claim 41, further comprising:
a speech inputting module, configured to obtain a speech input by a user; and
a preliminary recognizing module, configured to determine whether the designated wake-up word is comprised by performing preliminary recognition based on the speech;
wherein the speech data sending module is further configured to send the speech data comprising the designated wake-up word to the server when the speech includes the designated wake-up word.

43. The apparatus of claim 36, further comprising:
a speech inputting module, configured to obtain a speech input by a user; and
a wake-up word recognizing module, configured to obtain a result of whether the speech comprises the designated wake-up word by inputting the speech into a preset wake-up word recognition model; the preset wake-up word recognition model being obtained by training a preset type of neural network and being configured to output the result of whether the speech comprises the designated wake-up word based on the input speech;
wherein the parsing and recognizing module is further configured to obtain the speech control instruction by parsing and recognizing the speech control data in response to the trigger operation for interacting with the virtual object when the speech comprises the designated wake-up word.

44. The apparatus of claim 36, wherein the speech control data comprises a pet friend-making request, the pet friend-making request comprising a current pet identifier and a friend pet identifier;
wherein the apparatus further comprises:
a friend-making success information receiving module, configured to receive friend-making success information; and
a friendship special effect presenting module, configured to add the friend pet identifier to a friend list of the virtual object based on the friend-making success information, generate a friendship special effect, and present the friend special effect on the page of the live streaming room.

45. An electronic device, comprising:
a processor; and
a memory, configured to store instructions executable by the processor;
wherein the processor is configured to execute a method for processing data of a live steaming application of any one of claims 1 to 12 or a method for processing data of a live streaming application of any one of claims 13 to 22 by executing the instruction.

46. A storage medium, wherein when instruction stored in the storage medium are executed by a processor of an electronic device, the electronic device is caused to execute a method for processing data of a live steaming application of any one of claims 1 to 12 or a method for processing data of a live streaming application of any one of claims 13 to 22.
